# EUROPÄISCHE PATENTANMELDUNG

(11) **EP 1 770 454 A1**
(43) Veröffentlichungstag der Anmeldung: **04.04.2007**
(21) Anmeldenummer: 06018291.2
(22) Anmeldetag: 01.09.2006
(51) Int. Cl.: G05B 19/042, G05B 15/02

(54) **Hausautomationssystem**

(30) Priorität: 29.09.2005 DE 102005046625
(71) Anmelder: Diehl AKO Stiftung & Co. KG, 88239 Wangen (DE)
(72) Erfinder: Glaner, Robert, 88427 Bad Schussenried (DE); Kopplin, Robert, 88239 Wangen (DE); Taag, Jürgen, 88239 Wangen (DE)
(74) Vertreter: Diehl Patentabteilung

(57) **Zusammenfassung**

Es wird ein Hausautomationssystem mit mehreren Aktoren in/an einem Gebäude und einer Steuerung zum Steuern der mehreren Aktoren beschrieben, wobei die Steuerung mit einer Eingabevorrichtung zum Eingeben von Nutzerdaten.durch einen Benutzer versehen ist und die mehreren Aktoren entsprechend den eingegebenen Nutzerdaten steuert. Dabei ist die Eingabeeinrichtung zum Eingeben von personenbezogenen Nutzerdaten ausgebildet, und die Steuerung ist zum Bilden mehrerer Personenprofile aus den personenbezogenen Nutzerdaten ausgebildet. Schließlich ist die Steuerung zum Bilden eines Gesamtprofils aus den mehreren Personenprofilen ausgebildet und steuert die mehreren Aktoren gemäß dem so gebildeten Gesamtprofil. Dieses Hausautomationssystem bietet die Möglichkeit einer optimierten benutzerspezifischen Steuerung bei gleichzeitig einfacher Konfiguration durch den Benutzer.

## Beschreibung

Die vorliegende Erfindung betrifft ein Hausautomationssystem nach dem Oberbegriff des Anspruchs 1 sowie ein entsprechendes Verfahren zum Betrieb eines Hausautomationssystems nach dem Oberbegriff des Anspruchs 6.

Aus dem Stand der Technik sind Hausautomationssysteme bekannt, die im Allgemeinen mehrere Aktoren und Sensoren sowie eine Steuerung aufweisen. Die Sensoren umfassen dabei zum Beispiel Temperatursensoren und Helligkeitssensoren, und die Aktoren umfassen zum Beispiel Heizkörper, Rollläden, Beleuchtungen und dergleichen. Die Steuerung ist üblicherweise mit einer Eingabevorrichtung versehen, über die ein Benutzer seine Nutzerdaten eingeben kann, um die Aktoren entsprechend seinen Wünschen ansteuern zu lassen. Die Aktoren und Sensoren sind mit der Steuerung über das Hausstromnetz und über ein Datennetzwerk verbunden.

Ziel solcher Hausautomationssysteme ist es, verschiedene Häuser / Wohnungen bei einer möglichst optimalen Anpassung an die alltäglichen Bedürfnisse der Bewohner zu automatisieren. Dabei müssen zum Beispiel die Anwesenheitszeiten und Schlafenszeiten der Bewohner berücksichtigt werden, um die Beheizung, die Warmwasserbereitung, die Beleuchtung, die Gebäudeüberwachung (Einbruch, Feuer, Wasser), die Freigabe einer Fernüberwachung oder Fernsteuerung und dergleichen zu regeln.

Im Allgemein wird das Haus bzw. die Wohnung von mehreren Personen benutzt, sodass für das Hausautomationssystem eine Schwierigkeit darin besteht, die Automation an die individuellen Bedürfnisse aller Benutzer optimal anzupassen. Hinzu kommen die individuellen Einflüsse des Gebäudes (Zeitzone, Ausrichtung, thermische Trägheit, etc.), die von dem Hausautomationssystem ebenfalls berücksichtigt werden müssen. Der Berücksichtigung der großen Anzahl von Nutzerdaten und Gebäudedaten bei der Hausautomation steht bei herkömmlichen Systemen die Forderung nach einer möglichst einfachen Systemkonfiguration durch den jeweiligen Benutzer entgegen.

Der Erfindung liegt daher die Aufgabe zugrunde, ein Hausautomationssystem und ein Betriebsverfahren für ein Hausautomationssystem bereitzustellen, die einerseits eine möglichst optimale Anpassung der Hausautomation an die Bedürfnisse mehrerer Benutzer ermöglichen und andererseits eine möglichst einfache Konfiguration des Systems durch einen Benutzer gewährleisten.

Diese Aufgabe wird gelöst durch ein Hausautomationssystem mit den Merkmalen des Anspruchs 1 bzw. durch ein Verfahren zum Betrieb eines Hausautomationssystems mit den Merkmalen des Anspruchs 6. Vorteilhafte Ausgestaltungen und Weiterbildungen der Erfindung sind Gegenstand der jeweiligen Unteransprüche.

Das Hausautomationssystem umfasst mehrere Aktoren in/an einem Gebäude und eine Steuerung zum Steuern der mehreren Aktoren, wobei die Steuerung mit einer Eingabevorrichtung zum Eingeben von Nutzerdaten durch einen Benutzer versehen ist und die mehreren Aktoren entsprechend den eingegebenen Nutzerdaten steuert. Gemäß der vorliegenden Erfindung ist die Eingabeeinrichtung zum Eingeben von personenbezogenen Nutzerdaten ausgebildet; die Steuerung ist zum Bilden mehrerer Personenprofile aus den personenbezogenen Nutzerdaten ausgebildet; und die Steuerung ist zum Bilden eines Gesamtprofils aus den mehreren Personenprofilen ausgebildet und steuert die mehreren Aktoren gemäß dem so gebildeten Gesamtprofil.

Die Konfiguration des Hausautomationssystems kann durch den Benutzer in einfacher Weise durch die Eingabe von personenbezogenen Nutzerdaten (d.h. zum Beispiel den Anwesenheitszeiten der einzelnen Bewohner) erfolgen, ohne dass der Benutzer die gegenseitige Beeinflussung der einzelnen personenbezogenen Nutzerdaten berücksichtigen muss. Die Steuerung bildet aus den Nutzerdaten aller Personen jeweils ein Personenprofil und bildet schließlich aus den mehreren Personenprofilen ein Gesamtprofil als Basis für die Steuerung des Hausautomationssystems. Die Hausautomation erfolgt somit möglichst optimal unter Berücksichtigung der individuellen Bedürfnisse aller Bewohner.

In einer vorteilhaften Ausführungsform der Erfindung ist die Eingabeeinrichtung ferner zum Eingeben von Gebäudedaten ausgebildet; die Steuerung ist ferner zum Bilden eines Gebäudeprofils aus den Gebäudedaten ausgebildet; und die Steuerung bildet das Gesamtprofil aus den mehreren Personenprofilen und dem Gebäudeprofil, sodass neben en individuellen Bedürfnissen der Personen auch die gebäudespezifischen Merkmale optimal berücksichtigt werden können.

In einer Ausgestaltung der Erfindung weist die Eingabeeinrichtung eine manuelle Eingabevorrichtung und/oder wenigstens einen Sensor auf. Die Nutzerdaten bzw. die Gebäudedaten können so durch den Benutzer manuell eingegeben werden (z.B. über eine Tastatur). Alternativ oder zusätzlich können einige der Nutzerdaten bzw. Gebäudedaten auch durch Sensoren erfasst werden.

In einer weiteren Ausgestaltung der Erfindung enthalten die personenbezogenen Nutzerdaten Prioritätsmerkmale, und die Steuerung bildet das Gesamtprofil unter Berücksichtigung dieser Prioritätsmerkmale. Auf diese Weise kann zum Beispiel sichergestellt werden, dass die Heizung in einem von mehreren Personen benutzten Raum in Betrieb bleibt, wenn mindestens eine Person im Gebäude anwesend ist.

Ferner besteht in einer noch weiteren Ausgestaltung der Erfindung die Möglichkeit, dass die Steuerung zur Adaption des gebildeten Gesamtprofils an ein tatsächliches Benutzerverhalten in Abweichung von manuell eingegebenen Nutzerdaten ausgebildet ist. Dies bedeutet, dass zum Beispiel die Anwesenheitszeiten von Personen unter Verwendung von Sensoren an die tatsächlichen Anwesenheitszeiten adaptiert werden können.

Obige sowie weitere Merkmale und Vorteile der Erfindung werden aus der nachfolgenden Beschreibung eines bevorzugten, nicht-einschränkenden Ausführungsbeispiels unter Bezugnahme auf die beiliegenden Zeichnungen besser verständlich. Darin zeigen:
- Fig. 1: ein Beispiel für personenbezogene Nutzerdaten eines Benutzers; und
- Fig. 2: ein Beispiel für ein Personenprofil zur Steuerung eines Hausautomationssystems gemäß der vorliegenden Erfindung.

Das Hausautomationssystem der vorliegenden Erfindung ist gekennzeichnet durch die einfache Erstellung von spezifischen Personen- und Gebäudeprofilen sowie eine sinnvolle automatische Kombination der einzelnen Profile zu einem Gesamtprofil zur Steuerung des Hausautomationssystems. Das Hausautomationssystem baut dabei auf mehreren individuellen Personenprofilen und einem allgemeinen Gebäudeprofil auf. Diese Profile werden aus von einem Benutzer eingegebenen personenbezogenen Nutzerdaten und Gebäudedaten - gegebenenfalls ergänzt durch geeignete Sensormessdaten - erstellt und sind an den Tagesablauf aller Benutzer angepasst.

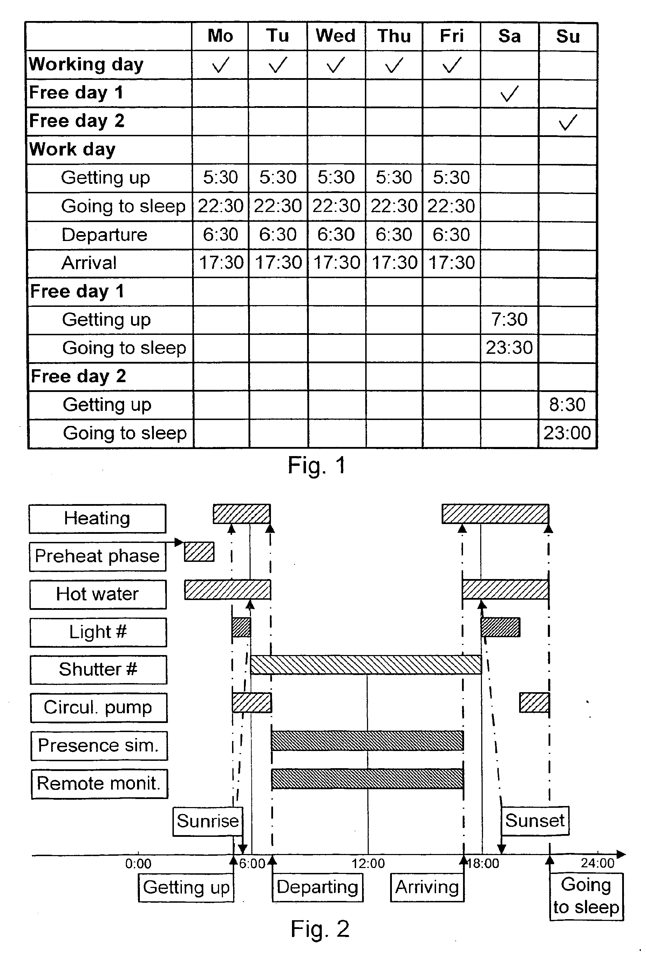

Unter Bezugnahme auf Fig. 1 und 2 wird nun ein Beispiel zur Erläuterung des erfindungsgemäßen Hausautomationssystems beschrieben.

Die Konfiguration des Hausautomationssystems besteht aus den folgenden drei Schritten:
a) Eingeben von personenbezogenen Nutzerdaten und von Gebäudedaten;
b) Erzeugen der individuellen Personenprofile aus den eingegebenen personenbezogenen Nutzerdaten und eines Gebäudeprofils aus den eingegebenen Gebäudedaten; und
c) Erzeugen eines gemeinsamen Gesamtprofils aus den mehreren Personenprofilen und dem Gebäudeprofil.

Zunächst wird die Eingabe der personenbezogenen Nutzerdaten und der Gebäudedaten in mehr Einzelheiten erläutert. Die individuellen Personenprofile sollen ein möglichst breites Spektrum an Anforderungen abdecken; gleichzeitig soll der Benutzer aber in die Lage versetzt sein, die persönlichen Profile der Bewohner einfach zu verstehen und zu bearbeiten.

Wie in Fig. 1 veranschaulicht, werden zum Beispiel die Anwesenheitszeiten und Schlafenszeiten einer Person in tabellarischer Form eingegeben, wobei auch eine Kalenderfunktion vorhanden ist, da sich die Anwesenheits- und Schlafenszeiten an Werktagen üblicherweise von denen an Wochenenden unterschieden. Ferner kann zur Ermittlung der freien Tage auch auf einen Kalender zurückgegriffen werden, und in Urlaubszeiten kann durch Drücken eines speziellen Knopfes auch an Werktagen das Automationsprogramm eines freien Tages übernommen werden. Außerdem besteht die Möglichkeit, jedem Benutzer bestimmte Räume zuzuordnen, die von ihm hauptsächlich bzw. überwiegend allein genutzt werden (zum Beispiel Kinderzimmer, Schlafzimmer, Arbeitszimmer).

Das Gebäudeprofil setzt beispielsweise die Temperatur im gesamten Gebäude auf 16°C, damit der Frostschutz gewährleistet ist und sich der Energieverbrauch in Grenzen hält. Anwesende Personen wünschen zumindest in den Räumen, in denen sie sich aufhalten, eine Temperatur von beispielsweise 22°C.

Ferner umfassen die personenbezogenen Nutzerdaten auch Informationen darüber, welche Aktoren in Abhängigkeit von welchen Parametern angesteuert werden sollen. So kann zum Beispiel das Aufstehen von Person A am Morgen durch die Funktion eines Weckers, durch Drücken eines Knopfes oder entsprechend den eingegebenen personenbezogenen Daten (siehe Fig. 1) erkannt werden, was das Einschalten einer Heizung und der Warmwasserbereitung (optimal mit einer gewissen Vorlaufzeit vor dem eigentlichen Aufstehen), das Einschalten der Kaffeemaschine und des Radios, das Hochfahren der Rollläden und dergleichen auslöst. Analog kann das Zubettgehen von Person A am Abend zum Beispiel durch Drücken eines entsprechenden Knopfes oder gemäß den eingegebenen personenbezogenen Nutzerdaten (siehe Fig. 1) erkannt werden, was das Ausschalten einer Heizung und der Warmwasserbereitung, das Ausschalten der Beleuchtungen, das Schließen der Türen und der Rollläden, das Einschalten einer Überwachungsanlage und dergleichen auslöst.

Ein Verlassen des Hauses durch Person A und die Ankunft von Person A zu Hause werden zum Beispiel entsprechend den eingegebenen Nutzerdaten, durch Drücken eines entsprechenden Knopfes oder mittels eines Bewegungssensors erkannt. Demgemäß werden die Heizung einzelner Räume, die Warmwasserbereitung, eine Überwachungsanlage und dergleichen gesteuert.

Falls, wie oben beschrieben, auch Sensoren zum Beispiel zum Erfassen des Aufstehens einer Person verwendet werden, können die eingegebenen Nutzerdaten im Laufe der Zeit durch das System auch an die tatsächlichen Gewohnheiten des Benutzers angepasst werden, falls dies erwünscht ist.

Aus den oben angegebenen personenbezogenen Nutzerdaten erstellt die Steuerung des Hausautomationssystems jeweils für jeden Benutzer zunächst ein eigenes Personenprofil. Ein Beispiel eines solchen Personenprofils ist in Fig. 2 veranschaulicht.

Fig. 2 zeigt auf der horizontalen Achse die Tageszeit an und zeigt auf der vertikalen Achse verschiedene Teilsysteme bzw. Aktoren des Hausautomationssystems an. Die unterhalb der horizontalen Achse angegebenen Zeitpunkte wurden vom Benutzer als die personenbezogenen Nutzerdaten eingegeben.

Plant Person A dieses Personenprofils zum Beispiel um 5:30 Uhr aufzustehen, so beginnt bereits um etwa 4:00 Uhr die Warmwasserbereitung und das Vorheizen des Gebäudes. Die Heizung der Räume auf 22°C beginnt um etwa 5:00 Uhr. Zur Zeit des Aufstehens wird die Beleuchtung eingeschaltet, eine Umwälzpumpe gestartet und die Rollläden geöffnet. Verlässt Person A um 6:30 Uhr das Haus, werden automatisch die Beleuchtung, die Heizung und die Umwälzpumpe ausgeschaltet und eine Überwachungsanlage mit gleichzeitiger Anwesenheitssimulation eingeschaltet (sofern keine weiteren Personen mehr im Haus anwesend sind). Die Abendroutine nach der Ankunft von Person A um 17:30 Uhr bis zum Schlafengehen um 22:30 Uhr wird analog durchgeführt.

Das Gebäudeprofil umfasst ferner allgemeine gebäude- und standortspezifische Parameter, wie Umgebungstemperatur, thermodynamische Trägheit, Sonnenaufgang, Sonnenuntergang und dergleichen. Diese Parameter sind zum Teil kalenderabhängig und werden zum Teil durch eine geeignete Sensorik (Temperatursensoren, Helligkeitssensoren) erfasst.

Durch Vorgabe von Prioritäten für die verschiedenen Profile sowie sinnvoller Regeln für die Kombination erzeugt die Steuerung dann aus den mehreren Personenprofilen und dem Gebäudeprofil ein Gesamtprofil.

Wenn zum Beispiel das Personenprofil von Person A die Raumtemperatur in der Wohnung auf 22°C einstellt und Person B die Wohnung verlässt, was nach dem Personenprofil von Person B ein Absenken der Raumtemperatur auf 16°C erfordern würde, so hat die Sollwertvorgabe der noch anwesenden Person A auf eine Raumtemperatur von 22°C natürlich Vorrang.

Ebenso sind einzelne Teilsysteme wie Beleuchtung und Heizung auf die Räume verteilt, die teilweise den Benutzern individuell zugeordnet werden können (z.B. Kinderzimmer, Arbeitszimmer). In diesem Fall hat das diesem Benutzer zugeordnete Personenprofil Vorrang vor den anderen Profilen.

Für die Bildung des Gesamtprofils aus den Personen- und Gebäudeprofilen sind zum Beispiel weitere Regeln zu beachten, wie das Ermitteln des frühesten Einschaltzeitpunktes für Teilsysteme, die später von anderen Personenprofilen benötigt werden; das Ermitteln des spätesten Ausschaltzeitpunktes für Teilsysteme, die später nicht mehr von anderen Personenprofilen benötigt werden; das Vermeiden schädlicher Kurzzeiteinschaltungen insbesondere von trägen Systemen wie Heizung und Warmwasserbereitung; das Vermeiden von Folgen kurzer Einschaltungen von Beleuchtungen, Rollläden, usw. und dergleichen.

Anhand des oben beschriebenen Beispiels wird der Fachmann auf dem Gebiet der Hausautomationstechnik problemlos das Wesen der vorliegenden Erfindung erkennen, ohne dass der durch die anhängenden Ansprüche definierte Schutzumfang der Erfindung allein auf dieses konkrete Ausführungsbeispiel beschränkt ist.

Während oben die Personenprofile für einzelne Personen bzw. Bewohner erstellt worden sind, ist es beispielsweise auch möglich, die Personenprofile für Personengruppen und für Haustiere zu bilden.

Wird ein mit einem erfindungsgemäßen Hausautomationssystem ausgestattetes Haus nur von einer Person benutzt, so bleiben die weiteren Personenprofile einfach leer und das Gesamtprofil wird unter Berücksichtigung auch dieser leeren Personenprofile erstellt.

Auch ist das Hausautomationssystem selbstverständlich nicht nur auf die oben genannten Aktoren und Sensoren beschränkt.

## Patentansprüche

1. Hausautomationssystem mit mehreren Aktoren in/an einem Gebäude und einer Steuerung zum Steuern der mehreren Aktoren, wobei die Steuerung mit einer Eingabevorrichtung zum Eingeben von Nutzerdaten durch einen Benutzer versehen ist und die mehreren Aktoren entsprechend den eingegebenen Nutzerdaten steuert,
**dadurch gekennzeichnet,**
**dass** die Eingabeeinrichtung zum Eingeben von personenbezogenen Nutzerdaten ausgebildet ist;
**dass** die Steuerung zum Bilden mehrerer Personenprofile aus den personenbezogenen Nutzerdaten ausgebildet ist; und
**dass** die Steuerung zum Bilden eines Gesamtprofils aus den mehreren Personenprofilen ausgebildet ist und die mehreren Aktoren gemäß dem Gesamtprofil steuert.

2. Hausautomationssystem nach Anspruch 1,
**dadurch gekennzeichnet,**
**dass** die Eingabeeinrichtung ferner zum Eingeben von Gebäudedaten ausgebildet ist;
**dass** die Steuerung zum Bilden eines Gebäudeprofils aus den Gebäudedaten ausgebildet ist; und
**dass** die Steuerung zum Bilden eines Gesamtprofils aus den mehreren Personenprofilen und dem Gebäudeprofil ausgebildet ist und die mehreren Aktoren gemäß dem Gesamtprofil steuert.

3. Hausautomationssystem nach Anspruch 1 oder 2,
**dadurch gekennzeichnet,**
**dass** die Eingabeeinrichtung eine manuelle Eingabevorrichtung und/oder wenigstens einen Sensor aufweist.

4. Hausautomationssystem nach einem der vorhergehenden Ansprüche,
**dadurch gekennzeichnet,**
**dass** die personenbezogenen Nutzerdaten Prioritätsmerkmale enthalten und die Steuerung das Gesamtprofil unter Berücksichtigung der Prioritätsmerkmale bildet.

5. Hausautomationssystem nach einem der vorhergehenden Ansprüche,
**dadurch gekennzeichnet,**
**dass** die Steuerung zur Adaption des gebildeten Gesamtprofils an ein tatsächliches Benutzerverhalten in Abweichung von manuell eingegebenen Nutzerdaten ausgebildet ist.

6. Verfahren zum Betrieb eines Hausautomationssystems mit mehreren Aktoren in/an einem Gebäude, wobei die mehreren Aktoren entsprechend eingegebenen Nutzerdaten gesteuert werden,
**gekennzeichnet durch**
Eingeben von personenbezogenen Nutzerdaten,
Bilden mehrerer Personenprofile aus den personenbezogenen Nutzerdaten, und
Bilden eines Gesamtprofils aus den mehreren Personenprofilen und Steuern der mehreren Aktoren gemäß dem Gesamtprofil.

7. Verfahren nach Anspruch 6,
**dadurch gekennzeichnet,**
**dass** ferner Gebäudedaten eingegeben werden, aus den Gebäudedaten ein Gebäudeprofil gebildet wird, und das Gesamtprofil zum Steuern der mehreren Aktoren aus den mehreren Personenprofilen und dem Gebäudeprofil gebildet wird.

8. Verfahren nach Anspruch 6 oder 7,
**dadurch gekennzeichnet,**
**dass** die personenbezogenen Nutzerdaten bzw. die Gebäudedaten manuell eingegeben werden und/oder mittels wenigstens eines Sensors erfasst werden.

9. Verfahren nach einem der Ansprüche 6 bis 8,
**dadurch gekennzeichnet,**
**dass** die personenbezogenen Nutzerdaten Prioritätsmerkmale enthalten und das Gesamtprofil unter Berücksichtigung der Prioritätsdokumente gebildet wird.

10. Verfahren nach einem der Ansprüche 6 bis 9,
**dadurch gekennzeichnet,**
**dass** das Gesamtprofil in Abweichung von manuell eingegebenen Nutzerdaten an ein tatsächliches Benutzerverhalten anpassbar ist.
